# EUROPÄISCHE PATENTSCHRIFT

(11) **EP 2 359 103 B1**
(45) Veröffentlichungstag und Bekanntmachung des Hinweises auf die Patenterteilung: **28.11.2012**
(21) Anmeldenummer: 09774678.8
(22) Anmeldetag: 14.12.2009
(51) Int. Cl.: G01G 17/04, G01G 21/22, G01G 23/01

(54) **LASTTRÄGER**
LOAD CARRIER
PORTE-CHARGE

(30) Priorität: 16.12.2008 DE 102008062144
(43) Veröffentlichungstag der Anmeldung: 24.08.2011
(73) Patentinhaber: Mettler-Toledo AG, 8606 Greifensee (CH)
(72) Erfinder: METZGER, Andreas, CH-8708 Männedorf (CH); SCHILLING, Peter, CH-8854 Siebnen (CH); BALTISBERGER, Stephan, CH-8625 Gossau (CH); BURKHARD, Hans-Rudolf, CH-8492 Wila (CH)
(86) Internationale Anmeldenummer: PCT/EP2009/067112
(87) Internationale Veröffentlichungsnummer: WO 2010/076179

(56) Entgegenhaltungen:
- EP-A1- 1 698 872
- DE-U1-202008 012 406
- JP-A- 3 218 420
- US-A1- 2002 096 371

## Beschreibung

Die Erfindung betrifft einen Lastträger mit einem Kalibriergewichtshalter und einer Aufnahmeschale sowie ein Verfahren zum Kalibrieren einer Wägezelle mit einem derartigen Lastträger.

Wägezellen, insbesondere solche für elektronische Waagen, können auf verschiedene Weisen kalibriert werden. Häufig weist die Waage ein internes Kalibriergewicht auf, welches über ein geeignetes Gestänge mit der Kraftübertragungseinrichtung der Wägezelle verbindbar ist. Ein internes Kalibriergewicht wird in der Regel nur zum Kalibrieren verwendet und hat während einer Messung keinen Kontakt mit der Kraftübertragungseinrichtung.

Eine andere Möglichkeit besteht in der Verwendung von separaten oder externen Kalibriergewichten, welche auf den Lastträger der Wägezelle aufgelegt werden. Das Auflegen sollte reproduzierbar und mit einer hohen Präzision erfolgen, damit jede Kalibrierung unter vergleichbaren Bedingungen stattfindet. Externe Kalibriergewichte werden beispielsweise bei Wägezellen eingesetzt, die besonders platzsparend ausgestaltet sind, so dass das Waagengehäuse im Inneren keinen Platz für ein Kalibriergewicht aufweist, oder bei Wägezellen, die für den Einsatz unter widrigen Umgebungsbedingungen (eng. harsh environments) besonders robust gestaltet sind, da unter solchen Bedingungen ein internes Kalibriergewicht nicht mit der nötigen Präzision bewegt werden kann.

Mit externen Kalibriergewichten können auch Mehrpunkt-Kalibrierungen unter Verwendung eines Kalibriergewichtssatzes durchgeführt werden. Ein Kalibriergewichtsatz besteht aus mehreren geeichten Kalibriergewichten, die nacheinander gewogen werden.

Damit das Gewicht eines Kalibriergewichts nicht verändert wird, sollten diese so aufbewahrt werden, dass sich möglichst kein Schmutz oder Staub auf diesen ablagert. Zudem sollten Kalibriergewichte immer mit geeigneten Hilfsmitteln, wie Pinzetten, Handschuhen oder einem Roboter, ergriffen und gehalten werden, damit beispielsweise kein Hautfett oder andere Verschmutzungen durch den Benutzer auf das Kalibriergewicht übertragen werden und sich so das Gewicht des Kalibriergewichts verändert. Diese Massnahmen sollten umso genauer eingehalten werden, je kleiner die Masse des verwendeten Kalibriergewichts ist.

Die beschriebenen Massnahmen lassen sich für Wägezellen, welche in einer Einzelwaage verwendet werden, relativ einfach umsetzen. Wird jedoch eine einzelne oder eine Vielzahl von kompakten Wägezellen zum Beispiel als Wägezellen-Array in einer Prozessanlage eingesetzt, so gestaltet sich der Einsatz von externen Kalibriergewichten schwierig, da einerseits der Platz beschränkt ist und zudem nicht immer optimale Bedingungen zur Lagerung und Verwendung der Kalibriergewichte herrschen. Zudem kann eine einzelne Wägezelle und/oder der zugehörige Lastträger nur umständlich aus dem Wägezellen-Array entfernt werden. Werden mit der Wägezelle nicht nur Stückgüter, sondern auch fliessfähige Substanzen vermessen, kann es während des Befüllens des Lastträgers zur Verschmutzung desselben kommen, wodurch wiederum ein beispielsweise zur Überprüfung der Kalibrierung eingesetztes Kalibriergewicht kontaminiert werden kann.

Damit ergibt sich die Aufgabe, eine Vorrichtung zu entwickeln, mit welcher eine Wägezelle stets einfach, rasch und mit hoher Präzision mit einem externen Kalibriergewicht kalibriert werden kann.

Gelöst wird diese Aufgabe durch einen Lastträger mit einer Aufnahmeschale für eine fliessfähige Substanz, einem Kalibriergewichtshalter für ein Kalibriergewicht und einem Verbindungselement zur Verbindung mit einem Lastaufnehmer einer Wägezelle. Die Aufnahmeschale ist zwischen dem Verbindungselement und dem Kalibriergewichtshalter angeordnet und ist durch eine Durchführung im Kalibriergewichtshalter mit der fliessfähigen Substanz beschickbar. Zudem ist der Kalibriergewichtshalter unabhängig vom Beschickungszustand der Aufnahmeschale mit einem Kalibriergewicht beschickbar.

Ein derartiger Lastträger ist sehr vorteilhaft, da das Kalibriergewicht unter reproduzierbaren Bedingungen auf den Kalibriergewichtshalter aufgelegt werden kann, ohne dass das Kalibriergewicht oder der Halter durch die fliessfähige Substanz kontaminiert werden. Dieses ist besonders vorteilhaft, da eine Kontamination oder Verschmutzung des Kalibriergewichts dessen Gewicht verändern und zu einer fehlerhaften Kalibrierung führen würde. Als "fliessfähige Substanz" werden hier sowohl Flüssigkeiten als auch fliessfähige Feststoffe, wie Pulver und ähnliches, verstanden. Mit einem derartigen Lastträger kann eine Kalibrierung unabhängig vom Beschickungsgrad der Aufnahmeschale durchgeführt oder eine Kalibrierung unter diesen Gegebenheiten überprüft werden.

Vorzugsweise sind der Kalibriergewichtshalter und der Boden der Aufnahmeschale voneinander vertikal beabstandet angeordnet, so dass das Kalibriergewicht sogar bei befüllter Aufnahmeschale auf den Kalibriergewichtshalter aufgelegt werden kann. Dieses ist insbesondere vorteilhaft, wenn die Wägezelle fest in eine Prozessanlage eingebaut ist und nicht für jeden Kalibriervorgang oder jede Überprüfung der Kalibrierung ausgebaut und/oder die Aufnahmeschale vollständig gereinigt und getrocknet werden kann. Die Ausgestaltung des Kalibriergewichtshalters ermöglicht eine Beschickung der Aufnahmeschale ohne Kontamination des Kalibriergewichtshalters, so dass eine Kalibrierung unter reproduzierbaren Bedingungen und ohne Kontamination des Kalibriergewichts stattfinden kann.

Neben Kalibriergewichten können selbstverständlich auch andere Festkörper auf den Kalibriergewichtshalter aufgelegt und gewogen werden, wenn der Lastträger mit einer Wägezelle in Kraftkontakt steht.

Die Aufnahmeschale weist mindestens eine Aufnahme für den Kalibriergewichtshalter auf, wodurch der Lastträger sehr kompakt ausgestaltet werden kann.

Die Aufnahme für den Kalibriergewichtsträger kann beispielsweise als umlaufendes Randprofil in der Aufnahmeschale ausgestaltet sein.

In einer weiteren Ausgestaltung kann die Aufnahme mindestens eine Aussparung in der Aufnahmeschale sein, welche vorzugweise am oberen Rand der Aufnahmeschale angeordnet ist, so dass der Kalibriergewichtshalter einfach in die mindestens eine Aussparung eingesetzt oder auf dieser abgelegt werden kann.

Der Kalibriergewichtsträger kann beispielsweise mindestens drei Träger umfassen, auf die ein Kalibriergewicht aufgesetzt werden kann, so dass dieses an mindestens drei Punkten getragen wird. Eine Drei-Punkt-Lagerung stellt eine stabile und reproduzierbare Lagerung für ein Kalibriergewicht dar.

In einer weiteren Ausgestaltung ist der Kalibriergewichtshalter gitterartig ausgestaltet und lösbar mit der Aufnahmeschale verbunden. Diese Ausgestaltung ermöglicht beispielsweise die Verwendung unterschiedlicher Gittertypen für verschiedene Kalibriergewichte, welche zum Beispiel je nach Gewicht meist unterschiedliche Durchmesser aufweisen oder unterschiedlich geformt sind. Zudem ermöglicht die lösbare Verbindung eine Reinigung des Kalibriergewichtshalters ohne Ausbau der Aufnahmeschale.

Der Kalibriergewichtshalter und die Aufnahmeschale können fest miteinander verbunden oder einstückig ausgestaltet sein. Derartige Lastträger sind besonders stabil und robust, so dass sie insbesondere für den Einsatz in einer Prozessanlage geeignet sind.

Vorzugsweise ist das Innere der Aufnahmeschale sowie der Kalibriergewichtshalter im Wesentlichen ecken- und kantenfrei ausgestaltet, so dass Rückstände der fliessfähigen Substanz nicht anhaften können und der Lastträger einfach zu reinigen ist. Dieses ist vor allem beim Einsatz unter hygienischen Bedingungen vorteilhaft.

Weiterhin kann der Kalibriergewichtshalter mindestens ein Zentrierelement aufweisen, welches zur Zentrierung des Kalibriergewichts dient, damit dieses in Bezug auf den Lastaufnehmer der Wägezelle zentriert ist. Zudem ermöglicht das mindestens eine Zentrierelement ein reproduzierbares Positionieren des Kalibriergewichts auf dem Kalibriergewichtshalter und dient der Reduzierung von Ecklastfehlern bei der Kalibrierung oder Wägung.

In einer weiteren Ausgestaltung weisen das Kalibriergewicht und der Kalibriergewichtshalter jeweils mindestes ein zusammenwirkendes Eingreifmittel auf, so dass das Kalibriergewicht sicher und reproduzierbar auf den Halter aufgelegt werden kann und zudem stabiler steht. Das Eingreifmittel kann beispielsweise durch die Formgebung des Kalibriergewichts und/oder des Kalibriergewichtshalters ausgebildet sein.

Die Beschickung des Kalibriergewichtshalters kann manuell oder automatisiert - zum Beispiel mit einem Roboter - erfolgen, so dass die Kalibrierung und/oder die Überprüfung einer bestehenden Kalibrierung einer Wägezelle in einen automatisierten Prozessablauf integriert und automatisch durchgeführt werden kann. Ebenso ist es möglich das Kalibriergewicht manuell aufzulegen, was gerade für die Kalibrierung einer einzelnen Wägezelle oder für eine Erst- oder Vorkalibrierung von Vorteil ist.

Zur Verwendung eines erfindungsgemässen Lastträgers mit einer Wägezelle, wird der Lastträger zunächst mit dem Lastaufnehmer der Wägezelle verbunden. Anschliessend wird der Kalibriergewichtshalter mit einem Kalibriergewicht beschickt, die Wägezelle kalibriert und danach das Kalibriergewicht wieder entfernt. Die Aufnahmeschale der kalibrierten Wägzelle kann nun mit einer ersten Menge einer fliessfähigen Substanz beschickt werden und deren Gewicht bestimmt werden.

Die erste Menge der fliessfähigen Substanz kann nun zumindest teilweise wieder entfernt und beispielsweise einer anderen Verwendung zugeführt werden, und die Aufnahmeschale mit einer weiteren Menge der fliessfähigen Substanz beschickt und das Gewicht der in der Aufnahmeschale vorliegenden Menge bestimmt werden. Alternativ kann die erste Menge der fliessfähigen Substanz in der Aufnahmeschale verbleiben und der Kalibriergewichtshalters wieder mit dem Kalibriergewicht beschickt, die Wägezelle kalibriert und anschliessend das Kalibriergewicht wieder entfernt werden. Vor jeder neuen Wägung des Kalibriergewichts und/oder einer Menge der fliessfähigen Substanz sollte die Wägezelle auf Null gestellt oder tariert werden, so dass in der Wagschale verbliebene Substanzreste die Wägung nicht beeinflussen.

Die Aufnahmeschale kann durch eine Durchführung im Kalibriergewichtshalter mit der fliessfähigen Substanz beschickt werden und der Kalibriergewichtshalter unabhängig vom Beschickungszustand der Aufnahme mit dem Kalibriergewicht beschickt werden, so dass die Wägezelle unabhängig vom Beschickungsgrad der Aufnahmeschale kalibriert werden kann. Dieses ist besonders vorteilhaft, da eine Kalibrierung der Wägezelle auch bei einer nicht vollständig geleerten Aufnahmeschale oder sogar bei gefüllter Aufnahmeschale durchgeführt oder überprüft werden kann, so dass beispielsweise zur Überprüfung der Kalibrierung im Betrieb einer Prozessanlage Substanzrückstände nicht vollständig entfernt werden müssen. Eine vollständige Entfernung und/oder Reinigung der Aufnahmeschale kann, insbesondere bei der Verwendung in einer Prozessanlage, nur bei einem Prozessunterbruch durchgeführt werden, welcher möglichst vermieden werden sollte.

Weiterhin kann die Wägezelle beispielsweise zu vorgegebenen Zeitpunkten oder nach bestimmten Zeitdauern ohne Ausbau des Lastträgers kalibriert werden, wodurch sich in einer Prozessanlage unter anderem die Umbauzeiten stark reduzieren lassen.

Die Kalibrierung der Wägezelle und insbesondere das Auflegen und das Entfernen des Kalibriergewichts auf den Lastträger können vorzugsweise automatisiert erfolgen, wobei auch eine manuelle Beschickung möglich ist.

Mehrere Ausführungsformen eines erfindungsgemässen Lastträgers werden anhand der nachfolgenden Figuren gezeigt, wobei gleiche Merkmale mit gleichen Referenzzeichen versehen sind. Die Figuren zeigen:
- Fig. 1: Eine Wägezelle für ein Wägezellen-Array mit einem erfindungsgemässen Lastträger und einer Ablage für ein Kalibriergewicht, wobei der Lastträger teilweise im Schnitt gezeigt ist;
- Fig. 2: einen Lastträger mit einem abnehmbaren, gitterartigen Kalibriergewichtshalter;
- Fig. 3: einen Lastträger mit einem als Randprofil einer Aufnahmeschale ausgebildeten Kalibriergewichtshalter;
- Fig. 4: einen Lastträger mit einem drei Träger aufweisenden Kalibriergewichtshalter;

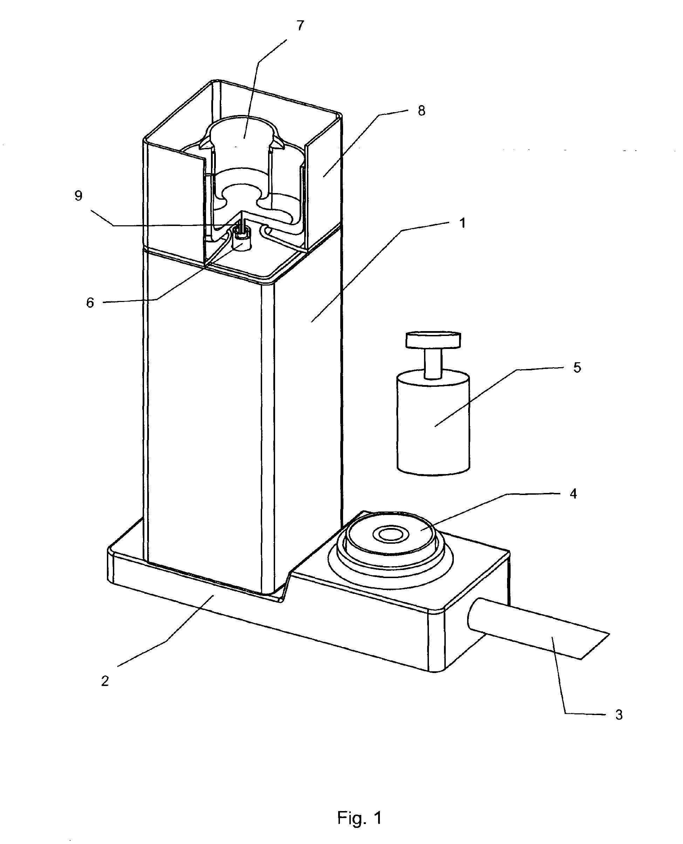

Figur 1 zeigt eine kompakte Wägezelle 1, welche zum Beispiel in einem aus mehreren Wägezellen bestehenden Array angeordnet sein kann. Die Wägezelle 1 weist einen Träger 2 auf, welcher unter anderem einen Anschluss 3 zur Steuerung der Wägezelle 1 aufweist. Neben der Wägezelle 1 ist auf dem Träger 2 eine Ablage 4 für ein Kalibriergewicht 5 ausgebildet, auf welcher das Kalibriergewicht 5 abgelegt werden kann, wenn keine Kalibrierung durchgeführt wird. In der Ablage 4 kann zudem eine Libelle integriert sein, welche zur Überprüfung der Ausrichtung der Wägezelle dient.

Auf der Wägezelle 1 ist ein Lastaufnehmer 6 zu erkennen, welcher mit einer in der Wägezelle 1 angeordneten Kraftübertragungsvorrichtung verbunden ist. Der Lastträger 7 ist über ein dornartiges Verbindungselement 9 mit dem freien Ende des Lastaufnehmers 6 verbunden. Der Lastträger 7 ist zusätzlich von einem mit der Wägezelle 1 verbundenen Windschutz 8 umgeben. Der Windschutz 8 ist vorzugsweise lösbar mit der Wägezelle 1 verbunden, so dass die Wägezelle 1 je nach Anforderungen mit oder ohne Windschutz 8 verwendet werden kann.

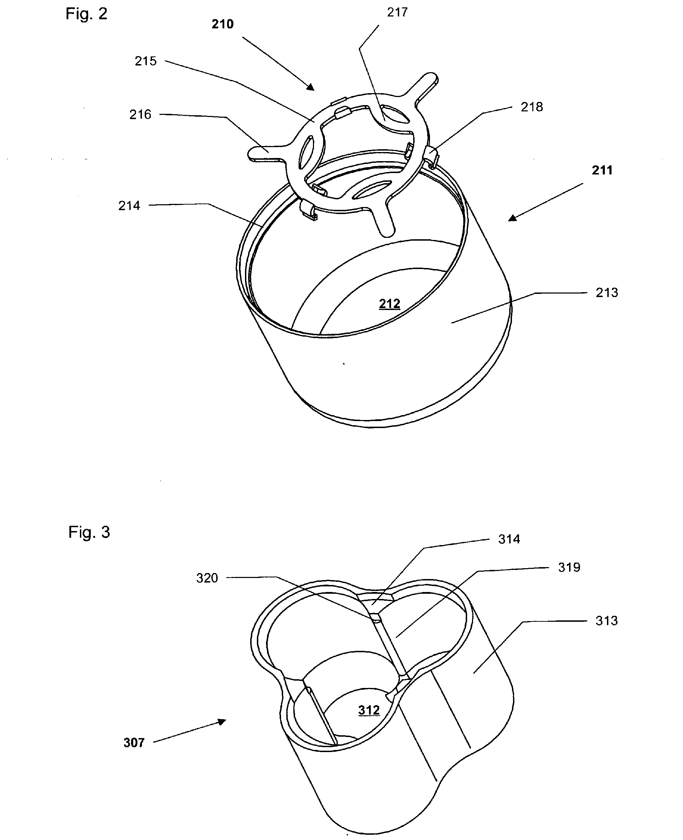

Verschiedene Ausgestaltungen des Lastträgers werden im Folgenden anhand der Figuren 2 bis 4 erläutert.

Figur 2 zeigt einen zweiteiligen Lastträger mit einem gitterartigen Kalibriergewichtshalter 210 und einer Aufnahmeschale 211. Die Aufnahmeschale 211 weist einen Boden 212 und eine mit diesem Boden 212 verbundene, umlaufende Wand 213 auf. Der Boden 212 des Lastträgers ist hier im Wesentlichen kreisförmig ausgestaltet, wobei selbstverständlich auch andere geometrische Ausgestaltungen möglich sind.

Das freie Ende der Wand 213 weist in diesem Ausführungsbeispiel ein umlaufendes Randprofil auf, welches einen innen liegenden Absatz 214 umfasst, der als Aufnahme für den Kalibriergewichtshalter 210 dient. Alternativ kann der Rand auch Aussparungen aufweisen, in welche der Kalibriergewichtshalter 210 eingreifen kann.

Der Kalibriergewichtshalter 210 ist im Wesentlichen ein flacher Ring 215 mit drei Auslegern 216, welche aussen am Ring 215 angeordnet sind und gleichmässig um den Aussenumfang des Rings 215 verteilt sind. Mit diesen Auslegern 216 kann der Kalibriergewichtshalter 210 auf dem Absatz 214 der Aufnahmeschale 211 platziert werden. Der Absatz 214 kann auch oder zusätzlich einen Einschnitt aufweisen, so dass die Ausleger 216 in diesen eingreifen können, wodurch eine stabile Verbindung gewährleistet wird. Weiterhin weist der Ring 215 an mehreren Stellen, hier drei, Verbreiterungen 217 auf, welche zur Gewichtsreduktion als Verbindungsbögen ausgestaltet sind. Das Kalibriergewicht (s. Figur 1) kann auf den Ring 215 gestellt werden, wenn dieser auf der Aufnahmeschale 211 aufliegt. Zur Kalibrierung sollte der Lastträger zuvor mit dem Lastaufnehmer einer Wägezelle verbunden worden sein.

Zur Stabilisierung und Befestigung des Kalibriergewichts kann der Ring 215 mit einem oder mehreren Zentrierelementen 218 versehen sein. Die Zentrierelemente 218 sind hier so ausgestaltet, dass sie auf der einen Seite des Rings 215 für Kalibriergewichte mit grösserem Durchmesser und auf der anderen Seite für solche mit kleinerem Durchmesser verwendbar sind. Die Auswahl erfolgt darüber, welche Seite des Kalibrierhalters 210 nach oben, also zum Kalibriergewicht, zeigt. Die Zentrierelemente 218 begrenzen zudem den Bereich in dem das Kalibriergewicht aufgesetzt werden kann.

Anstelle des umlaufenden Randprofils kann der Lastträger selbstverständlich auch mindestens drei Vertiefungen oder Aussparungen, in welche die Ausleger 216 des Kalibriergewichtshalters 210 eingreifen, oder drei einzelne Auflagen, auf die die Ausleger 216 des Kalibriergewichtshalters 210 aufgelegt werden können, aufweisen.

Der Ring 215 hat eine zentrale Aussparung, welche eine Befüllung oder eine Beschickung der Aufnahmeschale 211 auch bei aufliegendem Kalibriergewichtshalter 210 erlauben. Aufgrund des durch die Wand 213 vorgegebenen vertikalen Abstandes vom Boden 212 der Aufnahmeschale 211 zum Kalibriergewichtshalter 210 im zusammengesetzten Zustand, kann ein Kalibriergewicht sogar bei befüllte Aufnahmeschale 211 auf den Kalibriergewichtshalter 210 aufgelegt werden, ohne dass das Kalibriergewicht mit einer in der Aufnahmeschale 211 befindliche Substanz in Kontakt kommt. Dieses ist insbesondere vorteilhaft, wenn die Wägezelle fest in eine Prozessanlage eingebaut ist und nicht für jeden Kalibriervorgang oder jede Überprüfung der Kalibrierung ausgebaut und/oder die Aufnahmeschale 211 vollständig gereinigt und getrocknet werden kann.

Der Kalibriergewichtshalter 210 ermöglicht eine Beschickung der Aufnahmeschale 211 ohne Kontamination des Kalibriergewichtshalters 210, so dass eine Kalibrierung unter reproduzierbaren Bedingungen und ohne Kontamination des Kalibriergewichts stattfinden kann.

Figur 3 zeigt eine weitere Ausgestaltung eines erfindungsgemässen Lastträgers 307 mit einem in eine Aufnahmeschale integrierten Kalibriergewichtshalter. Die Aufnahmeschale umfasst wiederum einen Boden 312 und eine umlaufende Wand 313. Die Funktionalität dieses Lastträgers 307 entspricht im Wesentlichen der im Zusammenhang mit Figur 2 beschriebenen.

Zur Gewichtsreduktion und gleichzeitiger Bereitstellung eines möglichst grossen Volumens weist der Bodens 312 der Aufnahmeschale eine Form auf, welche im Wesentlichen drei, sich mittig überlappenden Kreisflächen entspricht. Der Boden 312 ist mit der Wand 313 verbunden, wobei die Wand 313 an den Schnittpunkten der Kreisflächen verstärkt oder verdickt ist, so dass sich an diesen Stellen säulenartige Träger 319 ausbilden, welche an ihren dem Boden 312 abgewandten Enden jeweils mindestens einen Absatz 314, 320 aufweisen. Diese Absätze 314, 320 stellen zugleich den Kalibriergewichtshalter dar und dienen zur Aufnahme des Kalibriergewichts (s. Figur 1).

Damit Kalibriergewichte mit unterschiedlichen Querschnitten, welche meist verschiedene Massen repräsentieren, ohne Austausch des Lastträgers 307 zur Kalibrierung einer Wägezelle eingesetzt werden können, weisen die Träger 319 mehrere Absätze 314, 320 auf, welche unterschiedlich weit ins Innere der Aufnahmeschale hineinragen.

Die Aufnahmeschale dieses Lastträgers 307 kann wie auch der in Figur 1 gezeigte Lastträger ohne Kontamination des Kalibriergewichtshalters durch die zwischen den Trägern 319 ausgebildete Durchführung beschickt werden, so dass eine reproduzierbare Kalibrierung gewährleistet werden kann.

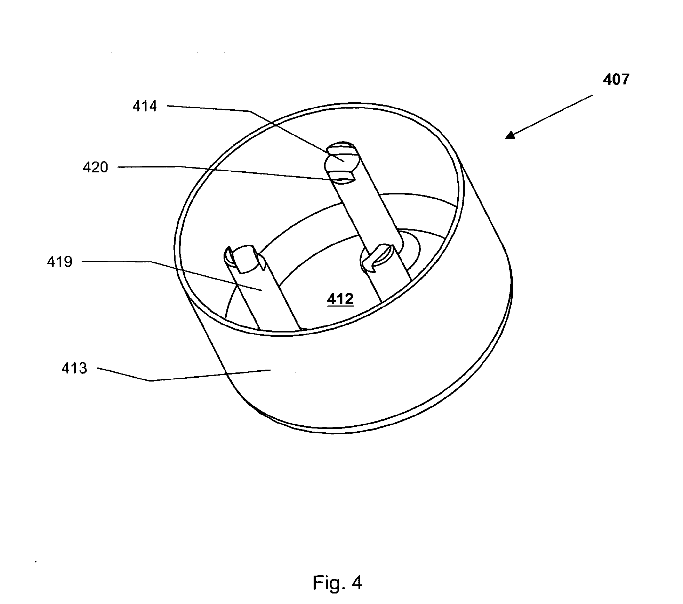

Der in Figur 4 gezeigte Lastträger 407 weist einen im Wesentlichen kreisförmigen Boden 412 mit einer umlaufenden Wand 413 als Aufnahmeschale auf. In der Aufnahmeschale sind mindestens drei säulenartige, freistehende Träger 419 angeordnet, deren eines Ende am Boden 412 befestigt ist. Die Höhe der Träger 419 entspricht hier ungefähr der Höhe der Wand 413, der Träger 419 kann selbstverständlich auch höher oder niedriger als die Wand 413 sein. Die freien Enden der Träger 419 weisen wiederum mehrere Absätze 414, 420 auf, welche unterschiedlich weit ins Innere der Aufnahmeschale hineinragen. Die sich jeweils auf einer Ebene befindlichen Absätze 414, 420 dienen als Auflage für Kalibriergewichte von unterschiedlicher Grosse, welche jeweils kontaminationsfrei auf die in einer Ebene angeordneten Absätze 414, 420 aufgelegt werden können.

Die Träger 419 sind derart angeordnet, dass sie eine zentrale Durchführung ausbilden durch die die Aufnahmeschale ohne Kontaminierung der Absätze 414, 420 der Träger 419 beschickt werden kann.

Die in den Figuren 2 bis 4 gezeigten Lastträger haben vorzugsweise abgerundete Innenflächen, um die Reinigung der Lastträger zu erleichtern und ein Anhaften von Substanzresten in der Aufnahmeschale zu minimieren oder sogar vollständig zu verhindern. Die gezeigten Lastträger weisen zudem eine abgerundete und/oder kreisförmige äussere Form auf, wobei ein erfindungsgemässer Lastträger selbstverständlich auch andere äussere Formen, wie oval oder eckig aufweisen kann.

Zur stabilen Lagerung des Kalibriergewichts weist ein erfindungsgemässer Kalibriergewichtshalter mindestens drei Auflagepunkte für ein Kalibriergewicht auf.

Die erfindungsgemässen Lastträger können mit verschiedenen Wägezellen verwendet werden, die Verwendung mit der Wägezelle aus Figur 1 ist nur als Beispiel gezeigt. Zudem zählen auch Lastträger, welche die in den Figuren 2 bis 4 gezeigten Merkmale in einer anderen Kombination zeigen, zu Lastträgern im Sinne dieser Erfindung.

### Bezugszeichen liste

- 1: Wägezelle
- 2: Träger
- 3: Anschluss
- 4: Ablage
- 5: Kalibriergewicht
- 6: Lastaufnehmer
- 7, 307, 407: Lastträger
- 8: Windschutz
- 9: Verbindungselement
- 210: Kalibriergewichtshalter
- 211: Aufnahmeschale
- 212,312,412: Boden
- 213,313,413: Wand
- 214,314,414: Absatz
- 215: Ring
- 216: Ausleger
- 217: Verbreiterung
- 218: Zentrierelement
- 319,419: Träger
- 320,420: Absatz

## Patentansprüche

1. Lastträger mit einer Aufnahmeschale (211) für eine fliessfähige Substanz, mit einem Kalibriergewichtshalter (210) für ein Kalibriergewicht (5), und mit einem Verbindungselement (9) zur Verbindung mit einem Lastaufnehmer (6) einer Wägezelle (1), **dadurch gekennzeichnet, dass** die Aufnahmeschale (211) zwischen dem Verbindungselement (9) und dem Kalibriergewichtshalter (210) angeordnet ist und durch eine Durchführung im Kalibriergewichtshalter (210) mit der fliessfähigen Substanz beschickbar ist, und dass der Kalibriergewichtshalter (210) unabhängig vom Beschickungszustand der Aufnahmeschale (211) mit einem Kalibriergewicht (5) beschickbar ist.

2. Lastträger nach Anspruch 1, **dadurch gekennzeichnet, dass** die Aufnahmeschale (211) mindestens eine Aufnahme für den Kalibriergewichtshalter (210) aufweist.

3. Lastträger nach Anspruch 2, **dadurch gekennzeichnet, dass** die Aufnahme ein umlaufendes Randprofil (214, 314) in der Aufnahmeschale ist.

4. Lastträger nach Anspruch 2, **dadurch gekennzeichnet, dass** die Aufnahme mindestens eine Aussparung im oberen Rand der Aufnahmeschale ist.

5. Lastträger nach einem der Ansprüche 1 bis 4, **dadurch gekennzeichnet, dass** der Kalibriergewichtshalter mindestens drei Träger (319, 419) umfasst.

6. Lastträger nach einem der Ansprüche 1 bis 5, **dadurch gekennzeichnet, dass** der Kalibriergewichtshalter (210) gitterartig ausgebildet und lösbar mit der Aufnahmeschale verbunden ist.

7. Lastträger einem der Ansprüche 1 bis 5, **dadurch gekennzeichnet, dass** der Kalibriergewichtshalter und die Aufnahmeschale fest miteinander verbunden oder einstückig ausgebildet sind.

8. Lastträger nach einem der Ansprüche 1 bis 7, **dadurch gekennzeichnet, dass** der Kalibriergewichtshalter (210) mindestens ein Zentrierelement (218) aufweist.

9. Lastträger nach einem der Ansprüche 1 bis 8, **dadurch gekennzeichnet, dass** das Kalibriergewicht und der Kalibriergewichtshalter jeweils mindestes ein zusammenwirkendes Eingreifmittel aufweisen.

10. Lastträger nach einem der Ansprüche 1 bis 9, **dadurch gekennzeichnet, dass** das Innere der Aufnahmeschale (211) und der Kalibriergewichtshalter (210) im Wesentlichen ecken- und kantenfrei ausgestaltet sind.

11. Lastträger nach einem der Ansprüche 1 bis 10, **dadurch gekennzeichnet, dass** der Kalibriergewichtshalter manuell beschickbar ist.

12. Lastträger nach einem der Ansprüche 1 bis 10, **dadurch gekennzeichnet, dass** der Kalibriergewichtshalter automatisiert beschickbar ist.

13. Verfahren zur Kalibrierung einer Wägezelle (1) und Wägung einer fliessfähigen Substanz unter Verwendung eines Lastträgers (7, 307, 407) nach einem der Ansprüche 1 bis 12, wobei das Verfahren die folgenden Schritte aufweist:
a. Verbinden des Lastträgers (7, 307, 407) mit einem Lastaufnehmer (6) der Wägezelle (1),
b. Beschicken eines Kalibriergewichtshalters (210) mit einem Kalibriergewicht (5), Kalibrieren der Wägezelle (1) und anschliessendes Entfernen des Kalibriergewichts (5),
c. Beschicken einer Aufnahmeschale (211) mit einer ersten Menge der fliessfähigen Substanz und Bestimmen des Gewichts der ersten Menge,
d. zumindest teilweises Entfernen der ersten Menge, Beschicken der Aufnahmeschale (211) mit einer weiteren Menge der fliessfähigen Substanz und Bestimmen des Gewichts der in der Aufnahmeschale (211) vorliegenden Menge,oder
Beschicken des Kalibriergewichtshalters (210) mit dem Kalibriergewicht (5), Kalibrieren der Wägezelle (1) und anschliessendes Entfernen des Kalibriergewichts (5),
**dadurch gekennzeichnet, dass** die Aufnahmeschale (211) durch eine Durchführung im Kalibriergewichtshalter (210) mit der fliessfähigen Substanz beschickt wird und dass der Kalibriergewichtshalter (210) unabhängig vom Beschickungszustand der Aufnahmeschale (211) mit dem Kalibriergewicht (5) beschickt werden kann.

14. Verwendung nach Anspruch 13, **dadurch gekennzeichnet dass**,
die Beschickung des Kalibriergewichtshalters (210) und/oder der Aufnahmeschale (211) automatisiert ist.

## Claims

1. Load carrier with a receiving pan (211) for a free-flowing substance, with a calibration weight holder (210) for a calibration weight (5), and with a connector element (9) for connecting to a load receiver (6) of a weighing cell (1), **characterized in that** the receiving pan (211) is arranged between the connector element (9) and the calibration weight holder (210) and is designed to be loaded with the free-flowing substance through a passage in the calibration weight holder (210), and that the calibration weight holder (210) can be loaded with a calibration weight (5) independently of the load status of the receiving pan (211).

2. Load carrier according to claim 1, **characterized in that** the receiving pan (211) comprises at least one seat for the calibration weight holder (210).

3. Load carrier according to claim 2, **characterized in that** the seat is constituted by a circumferential rim profile (214, 314) of the receiving pan.

4. Load carrier according to claim 2, **characterized in that** the seat is constituted by at least one recess in the rim at the top of the receiving pan.

5. Load carrier according to one of the claims 1 to 4, **characterized in that** the calibration weight holder comprises at least three supports (319, 419).

6. Load carrier according to one of the claims 1 to 5, **characterized in that** the calibration weight holder (210) is configured like a grid and is releasably connected to the receiving pan.

7. Load carrier according to one of the claims 1 to 6, **characterized in that** the calibration weight holder and the receiving pan are rigidly connected to each other or formed integrally of one piece.

8. Load carrier according to one of the claims 1 to 7, **characterized in that** the calibration weight holder (210) comprises at least one centering element (218).

9. Load carrier according to one of the claims 1 to 8, **characterized in that** the calibration weight and the calibration weight holder each comprise at least one means of engagement, wherein the respective means of engagement cooperate with each other.

10. Load carrier according to one of the claims 1 to 9, **characterized in that** the interior of the receiving pan (211) and the calibration weight holder (210) are configured essentially free of corners and edges.

11. Load carrier according to one of the claims 1 to 10, **characterized in that** the calibration weight holder can be loaded manually.

12. Load carrier according to one of the claims 1 to 10, **characterized in that** the calibration weight holder can be loaded automatically.

13. Method for calibrating a weighing cell (1) and weighing a free-flowing substance using a load carrier (7, 307, 407) according to one of the claims 1 to 12, wherein the method comprises the following steps:
a. connecting the load carrier (7, 307, 407) to a load receiver (6) of the weighing cell (1);
b. loading the calibration weight holder (210) with a calibration weight (5), calibrating the weighing cell (1), and subsequently removing the calibration weight (5);
c. loading a receiving pan (211) with a first batch of the free-flowing substance and measuring the weight of said first batch;
d. removing at least part of the first batch, loading the receiving pan (211) with a further batch of the free-flowing substance and measuring the weight of the batch that is present in the receiving pan (211),
or
loading the calibration weight holder (210) with the calibration weight (5), calibrating the weighing cell (1), and subsequently removing the calibration weight (5);
**characterized in that** the receiving pan (211) is loaded with the free-flowing substance through a passage in the calibration weight holder (210) and that the calibration weight holder (210) can be loaded with the calibration weight (5) independently of the load status of the receiving pan (211).

14. Use according to claim 13, **characterized in that** the loading of the calibration weight holder (210) and/or of the receiving pan (211) is automated.

## Revendications

1. Support de charge, avec une coupelle de réception (211) destinée à une substance fluide, avec un support de poids de calibrage (210) pour un poids de calibrage (5), et avec un élément d'assemblage (9) pour l'assemblage avec un récepteur de charge (6) d'une cellule de pesée (1), **caractérisé en ce que** la coupelle de réception (211) est disposée entre l'élément d'assemblage (9) et le support de poids de calibrage (210) et peut recevoir la substance fluide par un passage dans le support de poids de calibrage (210), et **en ce que** le support de poids de calibrage (210) peut être chargé avec un poids de calibrage (5), indépendamment de l'état de chargement de la coupelle de réception (211).

2. Support de charge selon la revendication 1, **caractérisé en ce que** la coupelle de réception (211) comporte au moins une admission pour le support de poids de calibrage (210).

3. Support de charge selon la revendication 2, **caractérisé en ce que** l'admission est un bord périphérique (214, 314) dans la coupelle de réception.

4. Support de charge selon la revendication 2, **caractérisé en ce que** l'admission consiste en au moins un évidement dans le bord supérieur de la coupelle de réception.

5. Support de charge selon l'une des revendications 1 à 4, **caractérisé en ce que** le support de poids de calibrage comprend au moins trois supports (319, 419).

6. Support de charge selon l'une des revendications 1 à 5, **caractérisé en ce que** le support de poids de calibrage (210) est conçu comme une grille et relié de façon détachable à la coupelle de réception.

7. Support de charge selon l'une des revendications 1 à 5, **caractérisé en ce que** le support de poids de calibrage et la coupelle de réception sont reliés fixement l'un à l'autre ou conçus en une seule pièce.

8. Support de charge selon l'une des revendications 1 à 7, **caractérisé en ce que** le support de poids de calibrage (210) comporte au moins un élément de centrage (218).

9. Support de charge selon l'une des revendications 1 à 8, **caractérisé en ce que** le poids de calibrage et le support de poids de calibrage comportent chacun au moins un moyen d'intervention coopérant l'un avec l'autre.

10. Support de charge selon l'une des revendications 1 à 9, **caractérisé en ce que** l'intérieur de la coupelle de réception (211) et le support de poids de calibrage (210) sont conçus quasiment sans coins ni arêtes.

11. Support de charge selon l'une des revendications 1 à 10, **caractérisé en ce que** le support de poids de calibrage peut être chargé manuellement.

12. Support de charge selon l'une des revendications 1 à 10, **caractérisé en ce que** le support de poids de calibrage peut être chargé automatiquement.

13. Procédé pour le calibrage d'une cellule de pesée (1) et le pesage d'une substance fluide, à l'aide d'un support de charge (7, 307, 407) selon l'une des revendications 1 à 12, le procédé comprenant les étapes suivantes :
a. l'assemblage du support de charge (7, 307, 407) avec un récepteur de charge (6) de la cellule de pesée (1),
b. chargement d'un support de poids de calibrage (210) avec un poids de calibrage (5), calibrage de la cellule de pesée (1) et éloignement consécutif du poids de calibrage (5),
c. chargement d'une coupelle de réception (211) avec une première quantité de substance fluide, et détermination d'un poids de la première quantité,
d. éloignement au moins partiel de la première quantité, chargement de la coupelle de réception (211) avec l'autre quantité de substance fluide, et détermination du poids de la quantité présente dans la coupelle de réception (211), ou
chargement du support de poids de calibrage (210) avec le poids de calibrage (5), calibrage de la cellule de pesage (1) et éloignement consécutif du poids de calibrage (5),
**caractérisé en ce que** la coupelle de réception (211) est chargée avec la substance fluide en traversant le support de poids de calibrage (210), et **en ce que** le support de poids de calibrage (210) peut être chargé avec le poids de calibrage (5) indépendamment de l'état de chargement de la coupelle de réception (211).

14. Utilisation selon la revendication 13, **caractérisée en ce que** le chargement du support de poids de calibrage (210) et/ou de la coupelle de réception (211) est automatisé.
